# EUROPEAN PATENT APPLICATION

(11) **EP 4 625 096 A1**
(43) Date of publication of application: **01.10.2025**
(21) Application number: 23901163.8
(22) Date of filing: 08.12.2023
(51) Int. Cl.: G06F 1/16, H02P 1/22, H02P 29/20, H02P 29/40, H02P 3/08

(54) **ELECTRONIC DEVICE COMPRISING FLEXIBLE DISPLAY AND OPERATION METHOD THEREFOR**

(30) Priority: 08.12.2022 KR 20220170707; 20.12.2022 KR 20220179521
(71) Applicant: Samsung Electronics Co., Ltd., Suwon-si, Gyeonggi-do 16677 (KR)
(72) Inventor: KANG, Hyunggwang, Suwon-si, Gyeonggi-do 16677 (KR); JEONG, Hoyoung, Suwon-si, Gyeonggi-do 16677 (KR); CHOI, Junwoo, Suwon-si, Gyeonggi-do 16677 (KR); KIM, Junhyuk, Suwon-si, Gyeonggi-do 16677 (KR); PARK, Gyeongtae, Suwon-si, Gyeonggi-do 16677 (KR); PARK, Sunghwan, Suwon-si, Gyeonggi-do 16677 (KR); CHOI, Yangsoo, Suwon-si, Gyeonggi-do 16677 (KR); SEO, Soohyun, Suwon-si, Gyeonggi-do 16677 (KR); LEE, Soyoung, Suwon-si, Gyeonggi-do 16677 (KR)
(74) Representative: Nederlandsch Octrooibureau
(86) International application number: PCT/KR2023/020238
(87) International publication number: WO 2024/123146

(57) **Abstract**

An electronic device according to one embodiment of the present disclosure may comprise: a memory that stores instructions; a first housing; a second housing that is disposed to be movable in a first direction or a second direction relative to the first housing and overlaps at least a portion of the first housing; a flexible display at least partially mounted on the surface of the second housing and at least partially collapsible or expandable; a motor that drives the second housing to move in the first direction or the second direction relative to the first housing; a drive circuit that controls the driving of the motor; and a processor. The instructions may be configured, when executed by the processor, to cause the electronic device: upon receiving a trigger signal, to transmit, to the drive circuit, a first drive signal for driving the motor; to transmit, to the drive circuit, a second drive signal for abnormally stopping the driving of the motor, on the basis of receiving a signal associated with abnormal operation of the motor while the motor is running; and to select and execute at least one from among at least one recovery control specified on the basis of the accumulated number of abnormal stops. Other embodiments may also be possible.

## Description

### [Technical Field]

An embodiment of the disclosure relate to an electronic device including a flexible display.

### [Background Art]

As the demand for mobile communication increases, or as the degree of integration of electronic devices increases, the portability of electronic devices such as mobile communication terminals may be increased, and better convenience may be provided in use of multimedia functions. For example, as touchscreen-integrated displays replace traditional mechanical (button-type) keypads, electronic devices may come more compact while functioning as an input device. For example, as the mechanical keypad may be omitted from the electronic device, portability of the electronic device may be improved. As the display area may be expanded to the area which used to be occupied by the mechanical keypad, the electronic device may provide a larger screen while remaining in the same size and weight as when it has the mechanical keypad.

Use of an electronic device with a larger screen may give more convenience in, e.g., web browsing or multimedia playing. A larger display may be adopted to output a larger screen. However, this way may be limited by the portability of the electronic device. According to an embodiment, a display using organic light emitting diodes may secure the portability of the electronic device while providing a larger screen. For example, a display using, or equipped with, organic light emitting diodes may implement a stable operation even if it is made quite thin, so that the display may be applied to an electronic device in a foldable, bendable or rollable form.

### [Detailed Description of the Invention]

### [Technical Problem]

An electronic device according to an embodiment of the disclosure may comprise memory storing instructions, a first housing, a second housing disposed to be movable with respect to the first housing in a first direction or a second direction, and overlapping at least a portion of the first housing, a flexible display at least partially fixed on a surface of the second housing, and at least partially rolled into the first housing or rolled out of the first housing, a motor driving the second housing to move with respect to the first housing in the first direction or the second direction, a drive circuit controlling the driving of the motor, a monitoring circuit determining an operation state of the motor, and a processor. The instructions may be configured to, when executed by the processor, enable the electronic device to, when receiving a trigger signal moving the second housing in the first direction or the second direction, transmit a first driving signal driving the motor to the drive circuit. The instructions may be configured to, when executed by the processor, enable the electronic device to transmit a second driving signal abnormal-stopping the driving of the motor to the drive circuit based on receiving a signal related to an abnormal operation of the motor from the monitoring circuit in a state in which the motor drives. The instructions may be configured to, when executed by the processor, enable the electronic device to, when an accumulated number of times of the abnormal-stopping is a designated first number or less, drive the motor in a reverse direction of a driving direction corresponding to the trigger signal.

A method for operating an electronic device according to an embodiment of the disclosure may comprise, when receiving a trigger signal moving the second housing in the first direction or the second direction, transmitting a first driving signal driving the motor to the drive circuit. The method for operating the electronic device according to an embodiment of the disclosure may comprise transmitting a second driving signal abnormal-stopping the driving of the motor to the drive circuit based on receiving a signal related to an abnormal operation of the motor from the monitoring circuit in a state in which the motor drives. The method for operating the electronic device according to an embodiment of the disclosure may comprise, when an accumulated number of times of the abnormal-stopping is a designated first number or less, driving the motor in a reverse direction of a driving direction corresponding to the trigger signal.

In a storage medium storing computer-readable instructions, the instructions may, when executed by a processor of an electronic device, enable the electronic device to perform operations. The operations may comprise, when receiving a trigger signal moving a second housing in a first direction or a second direction, transmitting, to a drive circuit, a first driving signal driving a motor to move the second housing with respect to a first housing in the first direction or the second direction. The operations may comprise transmitting a second driving signal abnormal-stopping the driving of the motor to the drive circuit based on receiving a signal related to an abnormal operation of the motor from the monitoring circuit in a state in which the motor drives. The operations may comprise, when an accumulated number of times of the abnormal-stopping is a designated first number or less, driving the motor in a reverse direction of a driving direction corresponding to the trigger signal.

### [Brief Description of the Drawings]

FIG. 1 is a block diagram illustrating an electronic device in a network environment according to an embodiment of the disclosure;
FIG. 2 is a view illustrating a state in which a second display area of a display is received in a housing according to an embodiment of the disclosure;
FIG. 3 is a view illustrating a state in which a second display area of a display is exposed to the outside of a housing according to an embodiment of the disclosure;
FIG. 4 is an exploded perspective view illustrating an electronic device according to an embodiment of the disclosure;
FIG. 5A is a cross-sectional view taken along line A-A' of FIG. 2 according to an embodiment of the disclosure;
FIG. 5B is a cross-sectional view taken along line B-B' of FIG. 3 according to an embodiment of the disclosure;
FIG. 6 is a block diagram illustrating an electronic device including a flexible display according to an embodiment of the disclosure;
FIG. 7A is a front view illustrating an electronic device including a flexible display in a drawn-in state of the flexible display according to an embodiment of the disclosure;
FIG. 7B is a rear view illustrating an electronic device including a flexible display in a drawn-out state of the flexible display according to an embodiment of the disclosure;
FIG. 8 is a graph illustrating magnetic field measurement values of a detection sensor according to moving distances of a flexible display or a second housing according to an embodiment of the disclosure;
FIG. 9 is a conversion graph of moving distances of a flexible display or a second housing according to an embodiment of the disclosure;
FIG. 10 is a detailed block diagram illustrating detection of an abnormal operation of a motor through a monitoring circuit according to an embodiment of the disclosure;
FIG. 11A is a graph illustrating an input current and an output current in a normal operation of a motor according to an embodiment of the disclosure;
FIG. 11B is a graph illustrating an input current and an output current in an abnormal operation of a motor according to an embodiment of the disclosure;
FIG. 12 illustrates a first notification displayed on a flexible display according to first recovery control according to an embodiment of the disclosure;
FIG. 13 illustrates a second notification displayed on a flexible display according to second recovery control according to an embodiment of the disclosure;
FIG. 14 illustrates a third notification displayed on a flexible display according to third recovery control according to an embodiment of the disclosure;
FIGS. 15A and 15B are flowcharts illustrating an operation method of an electronic device including a flexible display according to an embodiment of the disclosure; and
FIG. 16 is a flowchart illustrating an operation method related to adjustment of a driving force of an electronic device including a flexible display according to an embodiment of the disclosure.

### [Mode for Carrying out the Invention]

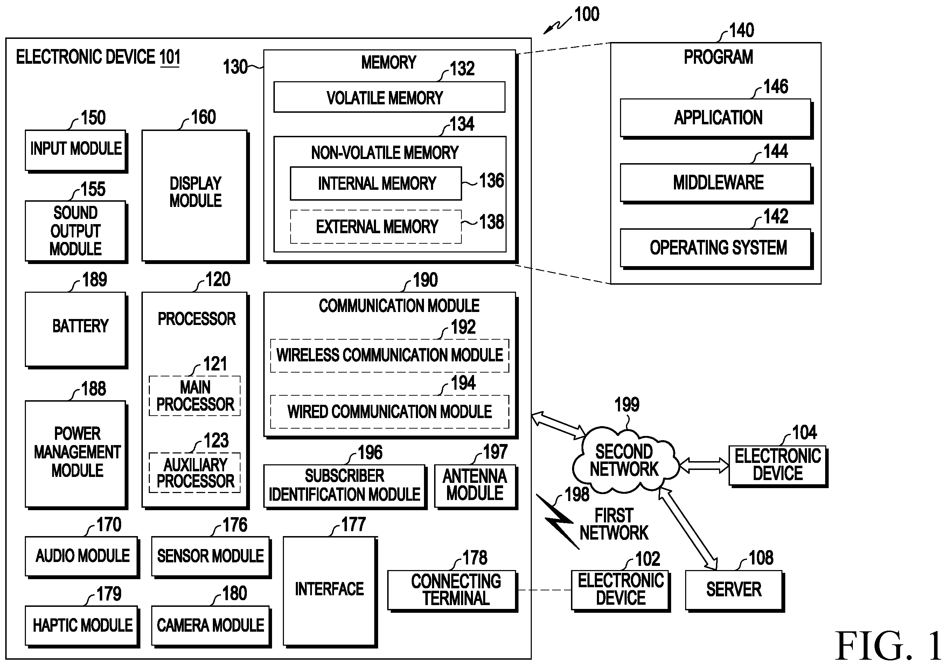

FIG. 1 is a block diagram illustrating an electronic device 101 in a network environment 100 according to an embodiment of the disclosure.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

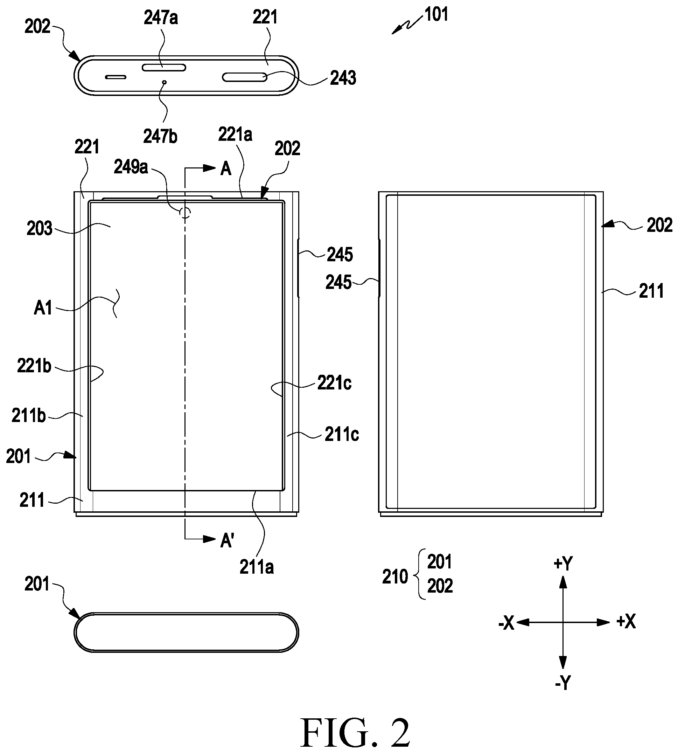

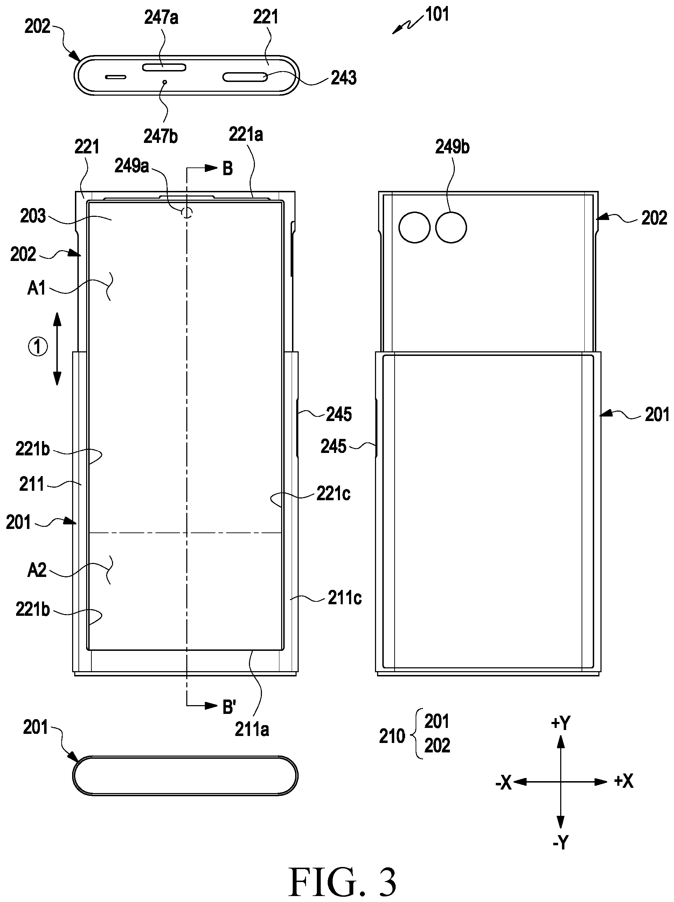

FIG. 2 is a view illustrating a state in which a second display area A2 of a display 203 is received in a housing 210 according to an embodiment of the disclosure. FIG. 3 is a view illustrating a state in which a second display area A2 of a display 203 is exposed to the outside of a housing 210 according to an embodiment of the disclosure.

FIGS. 2 and 3 illustrate a structure in which the display 203 (e.g., flexible display or rollable display) is extended in the length direction (e.g., +Y direction) when the electronic device 101 is viewed from the front. However, the extending direction of the display 203 is not limited to one direction (e.g., +Y direction). For example, the extending direction of the display 203 may be changed in design to be extendable in the upper direction (+Y direction), right direction (e.g., +X direction), left direction (e.g., -X direction), and/or lower direction (e.g., -Y direction).

The state shown in FIG. 2 may be referred to as a closed state of the electronic device 101 or housing 210 and a slide-in state of the display 203.

The state shown in FIG. 3 may be referred to as an opened state of the electronic device 101 or housing 210 and a slide-out state of the display 203.

Referring to FIGS. 2 and 3, the electronic device 101 may include a housing 210. The housing 210 may include a first housing 201 and a second housing 202 disposed to be movable relative to the first housing 201. According to an embodiment, the electronic device 101 may be interpreted as having a structure in which the first housing 201 is disposed to be slidable with respect to the second housing 202. According to an embodiment, the second housing 202 may be disposed to perform reciprocating motion by a predetermined distance in a predetermined direction with respect to the first housing 201, for example, a direction indicated by an arrow ①.

According to an embodiment, the second housing 202 may be referred to as a slide portion or a slide housing, and may be movable relative to the first housing 201. According to an embodiment, the second housing 202 may receive various electrical/electronic components, such as a circuit board or a battery.

According to an embodiment, the first housing 202 may have, disposed therein, a motor, a speaker, a sim socket, and/or a sub circuit board electrically connected with a main circuit board. The second housing 201 may receive a main circuit board on which electric components, such as an application processor (AP) and a communication processor (CP) are mounted.

According to an embodiment, the first housing 201 may include a first cover member 211 (e.g., a main case). The first cover member 211 may include a 1-1th sidewall 211a, a 1-2th sidewall 211b extending from the 1-1th sidewall 211a, and a 1-3th sidewall 211c extending from the 1-1th sidewall 211a and substantially parallel to the 1-2th sidewall 211b. According to an embodiment, the 1-2th sidewall 211b and the 1-3th sidewall 211c may be formed substantially perpendicular to the 1-1th sidewall 211a.

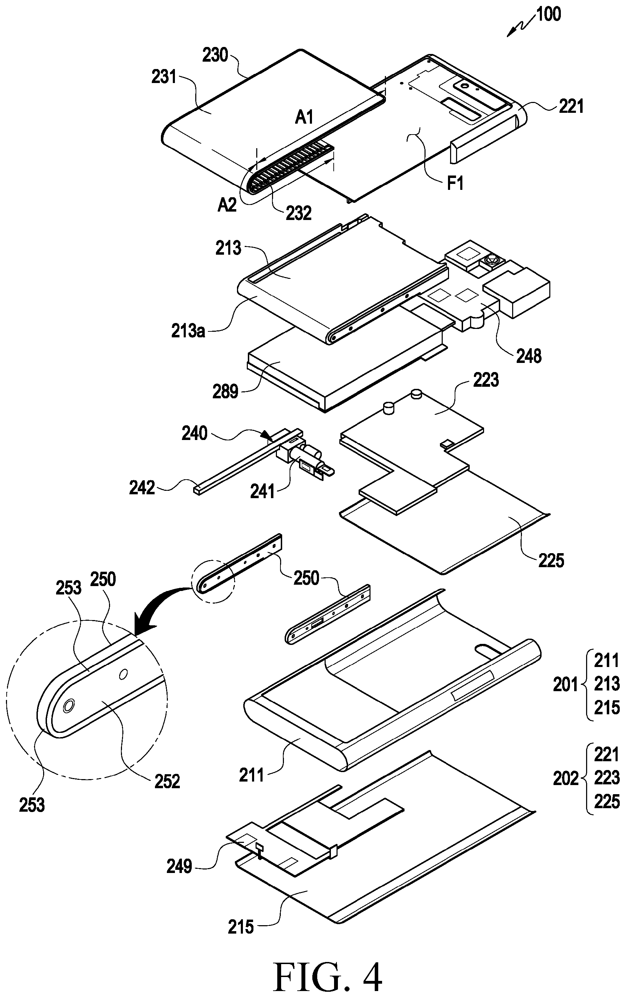

According to an embodiment, the 1-1th sidewall 211a, 1-2th sidewall 211b, and 1-3th sidewall 211c of the first cover member 211 may be formed to have a side opening (e.g., front opening) to receive (or surround) at least a portion of the second housing 202. For example, at least a portion of the second housing 202 may be surrounded by the first housing 201 and be slid in the direction parallel to the first surface (e.g., the first surface F1 of FIG. 4), e.g., arrow ① direction, while being guided by the first housing 201. According to an embodiment, the 1-1th sidewall 211a, the 1-2th sidewall 211b, and/or the 1-3th sidewall 211c of the first cover member 211 may be integrally formed. According to an embodiment, the 1-1th sidewall 211a, the 1-2th sidewall 211b, and/or the 1-3th sidewall 211c of the first cover member 211 may be formed as separate structures and be combined or assembled.

According to an embodiment, the first cover member 211 may be formed to surround at least a portion of the display 203. For example, at least a portion of the display 203 may be formed to be surrounded by the 1-1th sidewall 211a, the 1-2th sidewall 211b, and/or the 1-3th sidewall 211c of the first cover member 211.

According to an embodiment, the second housing 202 may include a second cover member 221 (e.g., a slide plate). The second cover member 221 may have a plate shape and include a first surface (e.g., the first surface F1 of FIG. 4) supporting internal components. For example, the second cover member 221 may support at least a portion of the display 203 (e.g., the first display area A1). According to an embodiment, the second cover member 221 may be referred to as a front cover.

According to an embodiment, the second cover member 221 may include a 2-1th sidewall 221a, a 2-2th sidewall 221b extending from the 2-1th sidewall 221a, and a 2-3th sidewall 221c extending from the 2-1th sidewall 221a and substantially parallel to the 2-2th sidewall 221b. According to an embodiment, the 2-2th sidewall 221b and the 2-3th sidewall 221c may be formed substantially perpendicular to the 2-1th sidewall 221a.

According to an embodiment, as the second housing 202 moves in a first direction (e.g., direction ①) parallel to the 1-2th sidewall 211b or the 1-2th sidewall 211c, the housing 210 may form an opened state and a closed state. In the closed state, the second housing 202 may be positioned at a first distance from the 1-1th sidewall 211a and, in the opened state, the second housing 202 may be moved to be positioned at a second distance larger than the first distance from the 1-1th sidewall 211a. In some embodiments, in the closed state, the first housing 201 may surround a portion of the 2-1th side wall 221a.

According to an embodiment, the electronic device 101 may include a display 203, a key input device 245, a connector hole 243, audio modules 247a and 247b, or camera modules 249a and 249b. According to an embodiment, the electronic device 101 may further include an indicator (e.g., a light emitting diode (LED) device) or various sensor modules.

According to an embodiment, the display 203 may include a first display area A1 and a second display area A2 configured to be exposed to the outside of the electronic device 101 based on the slide of the second housing 202. According to an embodiment, the first display area A1 may be disposed on the second housing 202. For example, the first display area A1 may be disposed on the second cover member 221 of the second housing 202. According to an embodiment, the second display area A2 may extend from the first display area A1, and as the second housing 202 slides relative to the first housing 201, the second display area A2 may be received in the first housing 201 (e.g., the slide-in state) or be visually exposed to the outside of the electronic device 101 (e.g., the slide-out state).

According to an embodiment, the second display area A2 may be received in the space positioned inside the first housing 201 or exposed to the outside of the electronic device while being substantially guided by one area (e.g., the curved surface 213a of FIG. 4) of the first housing 201. According to an embodiment, the second display area A2 may move based on a slide of the second housing 202 in the first direction (e.g., the direction indicated by the arrow ①). For example, while the second housing 202 slides, a portion of the second display area A2 may be deformed into a curved shape in a position corresponding to the curved surface 213a of the first housing 201.

According to an embodiment, when viewed from above the second cover member 221 (e.g., front cover), if the electronic device 210 changes from the closed state to opened state (e.g., if the second housing 202 slides to extend from the first housing 201), the second display area A2 may be gradually exposed to the outside of the first housing 201 and, together with the first display area A1, form a substantially flat surface. According to an embodiment, the display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the closed state or opened state of the housing 210, the exposed portion of the second display area A2 may be positioned on a portion (e.g., the curved surface 213a of FIG. 4) of the first housing, and a portion of the second display area A2 may remain in the curved shape in the position corresponding to the curved surface 213a.

According to an embodiment, the key input device 245 may be positioned in one area of the first housing 201. Depending on the appearance and the state of use, the electronic device 101 may be designed to omit the illustrated key input device 245 or to include additional key input device(s). According to an embodiment, the electronic device 101 may include a key input device (not shown), e.g., a home key button or a touchpad disposed around the home key button. According to an embodiment, at least a portion of the key input device 245 may be disposed on the 1-1th sidewall 211a, the 1-2th sidewall 211b, or the 1-3th sidewall 211c of the first housing 201.

According to an embodiment, the connector hole 243 may be omitted or may accommodate a connector (e.g., a universal serial bus (USB) connector) for transmitting and receiving power and/or data with an external electronic device. According to an embodiment (not shown), the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the second housing 202, but is not limited thereto. For example, the connector hole 243 or a connector hole not shown may be disposed in the first housing 201.

According to an embodiment, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker).

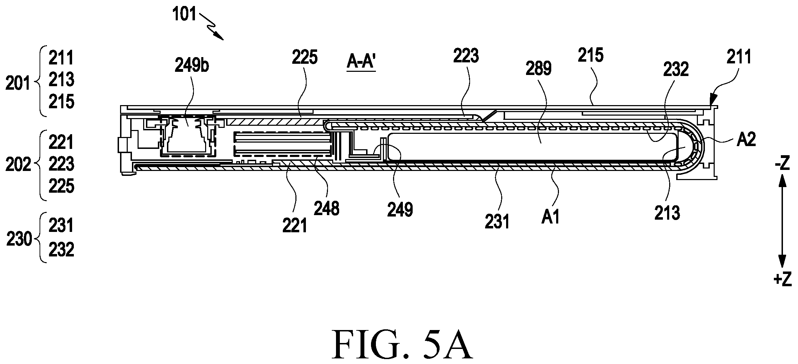

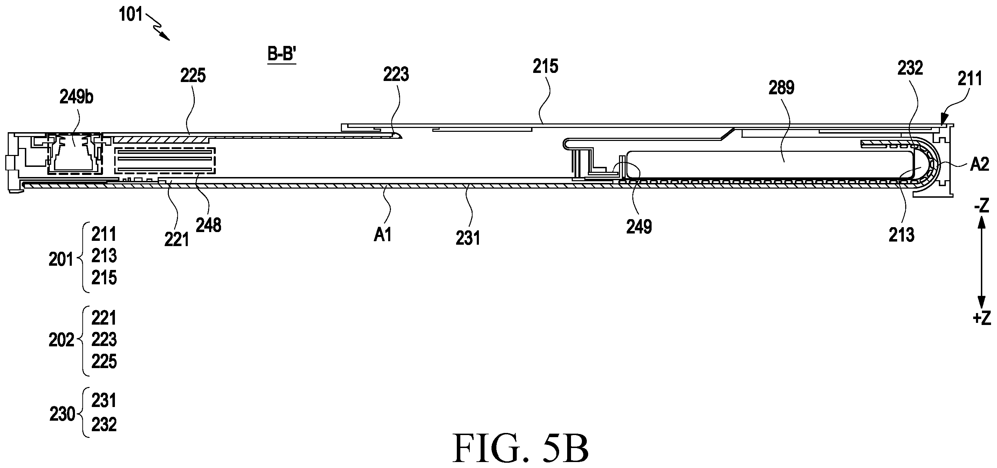

According to an embodiment, the camera modules 249a and 249b may include a first camera module 249a (e.g., a front camera) and a second camera module 249b (e.g., a rear camera) (e.g., the second camera module 249b of FIGS. 5A and 5B). According to an embodiment, the electronic device 101 may include at least one of a wide-angle camera, a telephoto camera, or a close-up camera. According to an embodiment, the electronic device 200 may measure the distance to the subject by including an infrared projector and/or an infrared receiver. The camera modules 249a and 249b may include one or more lenses, an image sensor, and/or an image signal processor. The first camera module 249a may be disposed to face in the same direction as the display 203. For example, the first camera module 249a may be disposed in an area around the first display area A1 or overlapping the display 203. When disposed in the area overlapping the display 203, the first camera module 249a may capture the subject through the display 203. According to an embodiment, the first camera module 249a may include an under display camera (UDC) that has a screen display area (e.g., the first display area A1) that may not be visually exposed but hidden. According to an embodiment, the second camera module 249b may capture the subject in a direction opposite to the first display area A1. According to an embodiment, the first camera module 249a and/or the second camera module 249b may be disposed on the second housing 202.

According to an embodiment, an indicator (not shown) of the electronic device 101 may be disposed on the first housing 201 or the second housing 202, and the indicator may include a light emitting diode to provide state information about the electronic device 101 as a visual signal. The sensor module (not shown) of the electronic device 101 may produce an electrical signal or data value corresponding to the internal operation state or external environment state of the electronic device. The sensor module may include, for example, a proximity sensor, a fingerprint sensor, or a biometric sensor (e.g., an iris/face recognition sensor or a heartrate monitor (HRM) sensor). According to another embodiment, the sensor module may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

FIG. 4 is an exploded perspective view illustrating an electronic device 101 according to an embodiment.

FIG. 5A is a cross-sectional view taken along line A-A' of FIG. 2 according to an embodiment of the disclosure.

FIG. 5B is a cross-sectional view taken along line B-B' of FIG. 3 according to an embodiment of the disclosure.

Referring to FIGS. 4, 5A, and/or 5B, an electronic device 101 may include a first housing 201, a second housing 202, a display assembly 230, and a driving structure 240. The configuration of the first housing 201, the second housing 202, and the display assembly 230 of FIGS. 4, 5A, and/or 5B may be identical in whole or part to the configuration of the first housing 201, the second housing 202, and the display 203 of FIGS. 2 and/or 3.

According to an embodiment, the first housing 201 may include a first cover member 211 (e.g., the first cover member 211 of FIGS. 2 and 3), a frame 213, and a first rear plate 215.

According to an embodiment, the first cover member 211 may accommodate at least a portion of the frame 213 and accommodate a component (e.g., battery 289) positioned in the frame 213. According to an embodiment, the first cover member 211 may be formed to surround at least a portion of the second housing 202. According to an embodiment, the second circuit board 249 receiving the electronic component (e.g., the processor 120 and/or the memory 130 of FIG. 1) may be connected to the first cover member 211.

According to an embodiment, the frame 213 may be connected to the first cover member 211. For example, the frame 213 may be connected to the first cover member 211. The second housing 202 is movable relative to the first cover member 211 and/or the frame 213. According to an embodiment, the frame 213 may accommodate the battery 289. According to an embodiment, the frame 213 may include a curved portion 213a facing the display assembly 230.

According to an embodiment, the first rear plate 215 may substantially form at least a portion of the exterior of the first housing 201 or the electronic device 101. For example, the first rear plate 215 may be coupled to the outer surface of the first cover member 221. According to an embodiment, the first rear plate 215 may provide a decorative effect on the exterior of the electronic device 101. The first rear plate 215 may be formed of at least one of metal, glass, synthetic resin, or ceramic.

According to an embodiment, the second housing 202 may include a second cover member 221 (e.g., the second cover member 221 of FIGS. 2 and 3), a rear cover 223, and a second rear plate 225.

According to an embodiment, the second cover member 221 may be connected to the first housing 201 through the guide rail 250 and, while being guided by the guide rail 250, reciprocate linearly in one direction (e.g., the direction of arrow ① in FIG. 3).

According to an embodiment, the second cover member 221 may support at least a portion of the display 203. For example, the second cover member 221 may include a first surface F1. The first display area A1 of the display 203 may be substantially positioned on the first surface F1 to maintain a flat panel shape. According to an embodiment, the second cover member 221 may be formed of a metal material and/or a non-metal (e.g., polymer) material. According to an embodiment, the first circuit board 248 accommodating the electronic component (e.g., the processor 120 and/or the memory 130 of FIG. 1) may be connected to the second cover member 221.

According to an embodiment, the rear cover 223 may protect a component (e.g., the first circuit board 248) positioned on the second cover member 221. For example, the rear cover 223 may be connected to the second cover member 221 and may be formed to surround at least a portion of the first circuit board 248. According to an embodiment, the rear cover 223 may include an antenna pattern for communicating with an external electronic device. For example, the rear cover 223 may include a laser direct structuring (LDS) antenna.

According to an embodiment, the second rear plate 225 may substantially form at least a portion of the exterior of the second housing 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 215 may be formed of at least one of metal, glass, synthetic resin, or ceramic.

According to an embodiment, the display assembly 230 may include a display 231 (e.g., the display 203 of FIGS. 2 and/or 3) and a multi-bar structure 232 supporting the display 203. According to an embodiment, the display 231 may be referred to as a flexible display, a foldable display, and/or a rollable display.

According to an embodiment, the multi-bar structure 232 may be connected to or attached to at least a portion (e.g., the second display area A2) of the display 231. According to an embodiment, as the second housing 202 slides, the multi-bar structure 232 may move with respect to the first housing 201. **In** the closed state of the electronic device 101 (e.g., FIG. 2), the multi-bar structure 232 may be mostly received in the first housing 201 and may be positioned between the first cover member 211 and the second cover member 221. According to an embodiment, at least a portion of the multi-bar structure 232 may move corresponding to the curved surface 213a positioned at the edge of the frame 213. According to an embodiment, the multi-bar structure 232 may be referred to as a display supporting member or supporting structure and may be in the form of one elastic plate.

According to an embodiment, the driving structure 240 may move the second housing 202 relative to the first housing 201. For example, the drive structure 240 may include a motor 241 configured to generate a driving force for sliding the housing 201 and 202. The driving structure 240 may include a gear (e.g., a pinion) connected to the motor 241 and a rack 242 configured to mesh with the gear.

According to an embodiment, the housing in which the rack 242 is positioned and the housing in which the motor 241 is positioned may be different. According to an embodiment, the motor 241 may be connected to the second housing 202. The rack 242 may be connected to the first housing 201. According to another embodiment, the motor 241 may be connected to the first housing 201. The rack 242 may be connected to the second housing 202.

According to an embodiment, the first housing 201 may receive the first circuit board 248 (e.g., a main board). According to an embodiment, the processor, memory, and/or interface may be mounted on the first circuit board 248. The processor may include one or more of, e.g., a central processing unit, an application processor, a graphic processing device, an image signal processing, a sensor hub processor, or a communication processor. According to an embodiment, the first circuit board 248 may include a flexible printed circuit board type radio frequency cable (FRC). The first circuit board 248 may be disposed on at least a portion of the second cover member 221 and may be electrically connected to the antenna module and the communication module.

According to an embodiment, the memory may include, e.g., a volatile or non-volatile memory.

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the electronic device 101 may include a second circuit board 249 (e.g., a sub circuit board) spaced apart from the first circuit board 248 (e.g., a main circuit board) in the first housing 201. The second circuit board 249 may be electrically connected to the first circuit board 248 through a connection flexible board. The second circuit board 249 may be electrically connected with electric components disposed in an end area of the electronic device 101, such as the battery 289 or a speaker and/or a sim socket, and may transfer signals and power. According to an embodiment, the second circuit board 249 may receive a wireless charging antenna (e.g., coil). For example, the battery 289 may receive power from an external electronic device through the wireless charging antenna. As another example, the battery 289 may transfer power to the external electronic device by the wireless charging antenna.

According to an embodiment, the battery 289 may be a device for supplying power to at least one component of the electronic device 101. The battery 189 may include a primary cell which is not rechargeable, a secondary cell which is rechargeable, or a fuel cell. The battery 289 may be integrally or detachably disposed inside the electronic device 101. According to an embodiment, the battery 289 may be formed of a single embedded battery or may include a plurality of removable batteries. According to an embodiment, the battery 289 may be positioned in a frame 213, and the battery 289 may be slid along with the frame 213.

According to an embodiment, the guide rail 250 may guide the movement of the multi-bar structure 232. For example, the multi-bar structure 232 may slide along the slit 251 formed in the guide rail 250. According to an embodiment, the guide rail 250 may be connected to the first housing 201. For example, the guide rail 250 may be connected to the first cover member 211 and/or the frame 213. According to an embodiment, the slit 251 may be referred to as a groove or recess formed in the inner surface of the guide rail 250.

According to an embodiment, the guide rail 250 may provide pressure to the multi-bar structure 233 based on the driving of the motor 241.

According to an embodiment, when the electronic device 101 changes from the closed state to opened state, the inner portion 252 of the guide rail 250 may provide pressure to the multi-bar structure 232. The multi-bar structure 232 receiving the pressure may be moved along the slit 251 of the guide rail 250, and the second housing 202 may be changed from the slide-in state to slide-out state with respect to the first housing 201. At least a portion of the display assembly 230 accommodated between the first cover member 211 and the frame 213 may be extended to the front surface.

According to an embodiment, when the electronic device 101 changes from the opened state to closed state, an outer portion 253 of the guide rail 250 may provide pressure to the bent multi-bar structure 232. The multi-bar structure 232 receiving the pressure may be moved along the slit 251 of the guide rail 250, and the second housing 202 may be changed from the slide-out state to slide-in state with respect to the first housing 201. At least a portion of the display assembly 230 may be accommodated between the first cover member 211 and the frame 213.

Referring to FIG. 5A, in the closed state of the electronic device 101, at least a portion of the second housing 202 may be disposed to be received in the first housing 201. As the second housing 202 is disposed to be received in the first housing 201, the overall volume of the electronic device 101 may be reduced. According to an embodiment, when the second housing 202 is received in the first housing 201, the size of the visually exposed display 231 may be minimized. For example, if the second housing 202 is completely received in the first housing 201, the first display area A1 of the display 231 may be visually exposed, and the second display area A2 may not be visually exposed. At least a portion of the second display area A2 may be disposed between the battery 289 and the rear plate 215 and 225.

Referring to FIG. 5B, in the opened state of the electronic device 101, at least a portion of the second housing 202 may protrude from the first housing 201. As the second housing 202 is disposed to protrude from the first housing 201, the overall volume of the electronic device 101 may be increased. According to an embodiment, if the second housing 202 protrudes from the first housing 201, at least a portion of the second display area A2 of the display 231, together with the first display area A1, may be visually exposed to the outside of the electronic device 101.

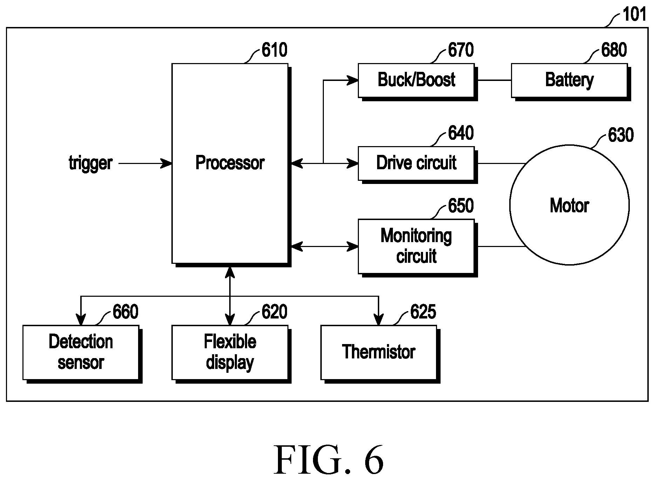

FIG. 6 is a block diagram illustrating an electronic device 101 including a flexible display 620 according to an embodiment of the disclosure.

Referring to FIG. 6, an electronic device 101 including a flexible display 620 according to an embodiment may include a processor 610, a flexible display 620, a motor 630, (e.g., the motor 241 of FIG. 2), a drive circuit 640, a monitoring circuit 650, a detection sensor 660, a Buck/Boost 670, and/or a battery 680 (e.g., the battery 289 of FIG. 2). Further, the electronic device 101 including the flexible display 620 according to an embodiment may include some or all of the components included in the electronic device 101 of FIG. 1.

In an embodiment, the processor 610 may execute software (e.g., a program) to control at least one other component (e.g., a hardware or software component) of the electronic device 101 including the flexible display 620 connected to the processor 610, and may perform various data processing or operations. In an embodiment, the processor 610 may store a command or data received from another component in memory (not shown), process the command or data stored in the memory (not shown), and store result data in the memory (not shown).

In an embodiment, the flexible display 620 may visually provide information to the outside (e.g., the user) of the electronic device 101 including the flexible display 620. In an embodiment, the flexible display 620 may be a display, a hologram device, or a projector and a display module (e.g., the display module 160 of FIG. 1) including a control circuit for controlling the device, and may include a touch sensor configured to detect a touch, or a pressure sensor configured to measure the strength of a force generated by the touch.

In an embodiment, two opposite end portions of the flexible display 620 are fixed to the first housing (e.g., the first housing 201 of FIG. 2) and the second housing (e.g., the second housing 202 of FIG. 2) respectively, and may be at least partially reduced or extended by sliding (e.g., slide-in or slide-out) between the first housing 201 and the second housing 202.

In an embodiment, a thermistor may measure the temperature of the flexible display 620 and transmit a signal related to the measured temperature to the processor 610. In an embodiment, the processor 610 may set a driving force of the motor 630 based on the measured temperature of the thermistor.

In an embodiment, the motor 630 is driven by power and may slide the second housing 202 in a first direction or a second direction with respect to the first housing 201. In an embodiment, the processor 610 may drive the motor 630 so that the second housing 202 moves in the first direction or the second direction based on receiving the trigger signal, and accordingly, the flexible display 620 may be reduced or extended.

In an embodiment, the trigger signal may be generated by the user's input or when a designated condition of the electronic device 101 including the flexible display 620 is met. For example, the trigger signal may include information about a specific direction (e.g., a first direction or a second direction) and/or a specific position of moving the flexible display 620 or the second housing 202.

In an embodiment, the drive circuit 640 may control the driving of the motor 630 by controlling the current, voltage, or power applied to the motor 630 based on the power stored in the battery 680. In an embodiment, the drive circuit 640 may convert (e.g., reduce or boost) power supplied from the battery using the Buck/Boost 670, and provide the converted power to the motor 630. In an embodiment, the drive circuit 640 may be a component included in a motor control unit (MCU).

In an embodiment, the electronic device 101 including the flexible display 620 may transmit a first driving signal for driving the motor 630 to the drive circuit 640 when obtaining a trigger signal. In an embodiment, the first driving signal may include a driving direction (e.g., the first direction or the second direction), a moving distance (or RPM) of the motor 630, and/or a driving force of the motor 630.

In an embodiment, the monitoring circuit 650 may detect each of an input current applied from the drive circuit 640 to the motor 630 and an output current flowing through the motor 630 and may determine an operation state of the motor 630 based on the input current and the output current. In an embodiment, the monitoring circuit 650 may calculate a difference between the input current and the output current, and determine the operation state of the motor 630 based on the calculated difference.

In an embodiment, when the monitoring circuit 650 detects the abnormal operation of the motor 630 based on the determination of the operating state of the motor 630, the monitoring circuit 650 may transmit a signal related to the abnormal operation to the processor 610. In an embodiment, the monitoring circuit 650 may be integrally formed with the drive circuit 640 or the processor 610, or may be a component included in a motor control unit (MCU).

In an embodiment, the detection sensor 660 may detect the position of the flexible display 620 or the second housing 202 according to the slide of the second housing 202 with respect to the first housing 201. In an embodiment, the second housing 202 may be movable within a designated section (e.g., 0 [mm] to 35 [mm]) with respect to the first housing 201, and the detection sensor 660 may detect the position of the second housing 202 within the designated interval. In an embodiment, the detection sensor 660 may detect a bending position of the flexible display 620 or a position of the second housing 202 with respect to the first housing 201.

In an embodiment, the detection sensor 660 may detect the position of the flexible display 620 or the second housing 202 using the Hall effect by the magnetic field of the magnet. The corresponding embodiment is described below.

In an embodiment, the detection sensor 660 may detect the position of the flexible display 620 or the second housing 202 based on a change in capacitance or inductance according to the movement of the second housing 202. In an embodiment, the detection sensor 660 may detect the position of the flexible display 620 or the second housing using a physical switch. In an embodiment, the detection sensor 660 may detect the position of the flexible display 620 or the second housing 202 using a roller. In an embodiment, the detection sensor 660 may detect the position of the flexible display 620 or the second housing 202 using a pressure sensor.

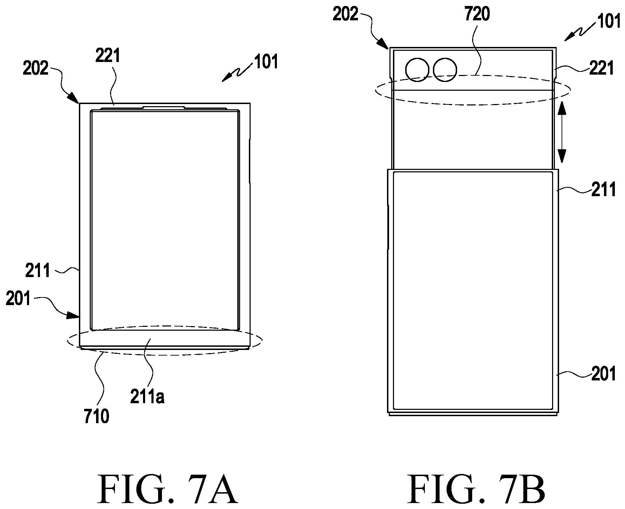

FIG. 7A is a front view illustrating an electronic device 101 including a flexible display 620 in a drawn-in state of the flexible display 620 according to an embodiment of the disclosure. FIG. 7B is a rear view illustrating an electronic device 101 including a flexible display 620 in a drawn-out state of the flexible display 620 according to an embodiment of the disclosure.

Referring to FIGS. 7A and 7B, in the electronic device 101 including the flexible display 620 according to an embodiment, a jam may occur while the flexible display 620 is reduced or extended.

In an embodiment, the jam of the electronic device 101 including the flexible display 620 may frequently occur in an area 710 adjacent to the 1-1th sidewall (e.g., the 1-1th sidewall 211a of FIG. 2) of the first cover member (e.g., the first cover member 211 of FIG. 2) where the flexible display 620 of FIG. 7A is rolled into the inside, or an area 720 that is a boundary between the first cover member 211 of the first housing (e.g., the first housing 201 of FIG. 2) and the second cover member (e.g., the second cover member 221 of FIG. 2) of the second housing (e.g., the second housing 202 of FIG. 2).

In an embodiment, when a separate sensor for detecting a jam of the electronic device 101 including the flexible display 620 is mounted, a separate mounting space is required, which may cause damage to design completeness. Further, since the sensor needs to be mounted on the entire boundary surface (front surface, side surface, and rear surface) where a jam may occur in the electronic device 101 including the flexible display 620, it may be difficult to properly mount the sensor. Accordingly, according to an embodiment of the disclosure, an abnormal operation of the motor 630 may be detected without adding a separate sensor.

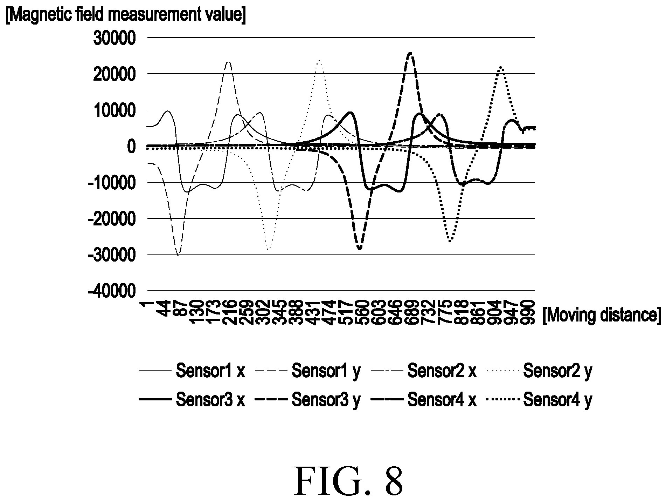

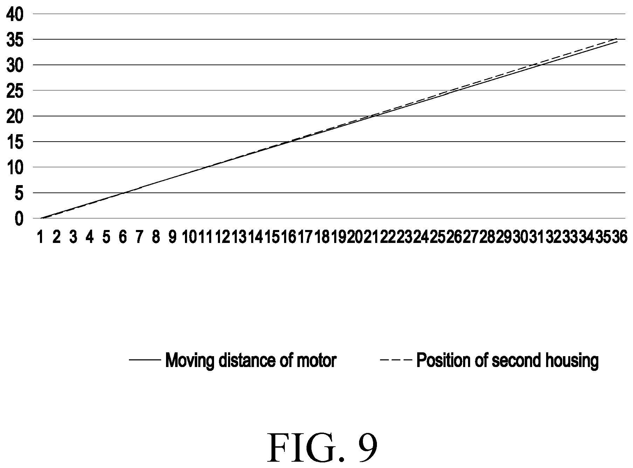

FIG. 8 is a graph illustrating magnetic field measurement values of a detection sensor 660 according to moving distances of a flexible display 620 or a second housing 202 according to an embodiment of the disclosure;. FIG. 9 is a conversion graph of moving distances of a flexible display 620 or a second housing 202 according to an embodiment of the disclosure.

Referring to FIGS. 8 and 9, the detection sensor 660 according to an embodiment may include a plurality of Hall ICs (not shown) and magnets (not shown). For example, the number of Hall ICs may be set according to the size (stroke) and/or accuracy of the movable section (e.g., 0 [mm] to 35 [mm]) of the flexible display 620 or the second housing.

For example, as shown in FIG. 8, the detection sensor 660 may include four Hall ICs (e.g., Sensor 1, Sensor 2, Sensor 3, and Sensor 4), the magnet may be fixed to the front cover (e.g., the second cover member 221 of FIG. 2) included in the second housing (e.g., the second housing 202 of FIG. 2), and each Hall IC may be fixed to the frame cover (e.g., the frame 213 of FIG. 2) included in the first housing (e.g., the first housing 201 of FIG. 2) at a different position. In an embodiment, as the rack is moved by the driving of the motor 630, the front cover 221 fixed to the rack may move together, and accordingly, the magnet fixed to the front cover 221 may move relative to the Hall IC fixed to the frame cover 213. In an embodiment, the four Hall ICs (e.g., Sensor 1, Sensor 2, Sensor 3, and Sensor 4) included in the detection sensor 660 may measure the intensity of the magnetic field that changes according to the position of the relatively moving magnet, and accordingly estimate the moving distance of the flexible display 620 or the second housing 202.

In an embodiment, each Hall IC may measure the strength of the magnetic field in the x-axis, y-axis, or z-axis, and may estimate the position of the magnet using the measurement value of at least one of the three axes and match the moving distance of the flexible display 620 or the second housing 202.

In an embodiment, when the motor 630 operates normally, as shown in FIG. 9, the moving distance of the flexible display 620 or the second housing 202 according to the moving distance of the motor 630 may have 1:1 correspondence, and the moving distance of the motor 630 and the moving distance of the magnet may correspond to each other.

When receiving the trigger signal, the electronic device 101 including the flexible display 620 according to an embodiment may control the motor 630 to be driven in the first direction or the second direction through the drive circuit 640, and may identify whether the flexible display 620 or the second housing 202 reaches a position corresponding to the trigger signal through the detection sensor 660. In an embodiment, when it is determined that the flexible display 620 or the second housing reaches the position corresponding to the trigger signal through the detection sensor 660, the electronic device 101 including the flexible display 620 may complete the operation of the motor 630 corresponding to the trigger signal.

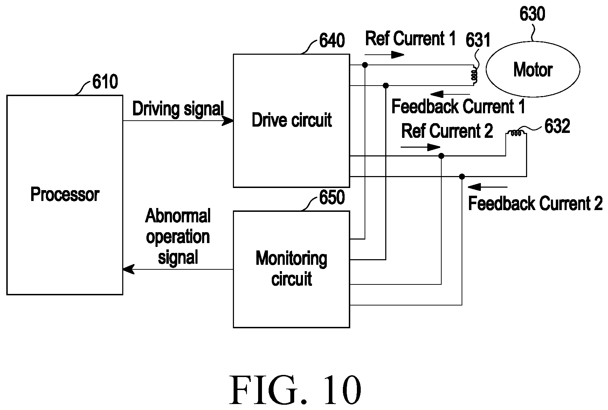

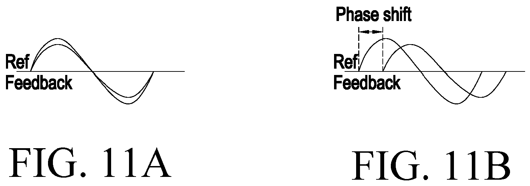

FIG. 10 is a detailed block diagram illustrating detection of an abnormal operation of a motor 630 through a monitoring circuit 650 according to an embodiment of the disclosure. FIG. 11A is a graph illustrating an input current and an output current in a normal operation of a motor 630 according to an embodiment of the disclosure. FIG. 11B is a graph illustrating an input current and an output current in an abnormal operation of a motor 630 according to an embodiment of the disclosure.

Referring to FIG. 10, the motor 630 according to an embodiment may include at least one coil 631 and 632, and the drive circuit 640 may apply a current and a voltage to each of at least one coil 631 and 632 included in the motor 630.

In an embodiment, an induced electromotive force may be generated at, at least one coil 631 and 632 included in the motor 630 by a position relative to the magnet (not shown) included in the motor 630. In an embodiment, the output currents Feedback Current 1, 2 flowing through at least one coil 631 and 632 may be the sum of the current Ref Current 1, 2 applied from the drive circuit 640 and the induced current. In an embodiment, the monitoring circuit 650 may obtain the signal of the input current applied to each of the at least one coil from the drive circuit 640.

In an embodiment, when an abnormal load larger than the driving force by the driving of the motor 630 is generated, a position difference occurs between the magnet (not shown) and at least one coil 631 and 632 included in the motor 630, and thus a current by the induced electromotive force may flow through at least one coil 631 and 632. In an embodiment, the monitoring circuit 650 may obtain a signal of the output currents Feedback Current 1, 2 flowing through at least one coil 631 and 632.

For example, as shown in FIG. 10, the motor 630 may be a two-phase motor 630, may include a first coil 631 and a second coil 632, and the drive circuit 640 may apply input currents Ref current 1 and Ref current 2 to the first coil 631 and the second coil 632, respectively. In an embodiment, the monitoring circuit 650 may detect the input currents Ref Current 1 and Ref Current 2 applied to the first coil 631 and the second coil 632, respectively, from the drive circuit 640. In an embodiment, the monitoring circuit 650 may detect the feedback currents Feedback Current 1 and Feedback current 2 flowing through the first coil 631 and the second coil 632. In an embodiment, the monitoring circuit 650 may determine the operation state of the motor 630 using the input currents Ref Current 1 and Ref Current 2 and the output currents Feedback Current 1 and Feedback Current 2 corresponding to at least one of the first coil 631 and the second coil 632. Since the monitoring circuit 650 according to an embodiment may determine the operation state every period of the current applied to the motor 630, the abnormal operation may be detected more quickly than the operation using other sensors.

Referring to FIGS. 11A and 11B, in an embodiment, the monitoring circuit 650 may determine the operation state of the motor 630 using a phase difference (phase shift) over time between the input current and the output current corresponding to at least one coil included in the motor 630.

For example, when the motor 630 operates normally, a phase difference (phase shift) over time may hardly occur between the input current Ref and the output current Feedback, as shown in FIG. 11A. For example, when the motor 630 operates abnormally, a phase difference (phase shift) over time may occur between the input current Ref and the output current Feedback, as shown in FIG. 11B. In an embodiment, when the phase difference (phase shift) over time between the input current Ref and the output current Feedback is larger than or equal to a threshold, the monitoring circuit 650 may determine that the motor 630 operates abnormally, and may transmit a signal related to the abnormal operation of the motor 630 to the processor 610.

The electronic device 101 including the flexible display 620 according to an embodiment may transmit the second driving signal to the drive circuit 640 based on receiving a signal related to the abnormal operation of the motor 630 by more than or equal to a threshold number of times set based on the accumulated number of times of abnormal-stopping. In an embodiment, the threshold number may be set based on the accumulated number of times of abnormal-stopping. For example, if the accumulated number of times of abnormal-stopping is 0, it may be set to a first number (e.g., once or twice), and accordingly, abnormal stopping and recovery control of motor 630 may be performed quickly. For example, when the accumulated number of times of abnormal-stopping is 1 or 2 or more, the threshold number may be set to a second number (e.g., 3 times) larger than the first number.

When the electronic device 101 including the flexible display 620 according to an embodiment receives a signal related to the abnormal operation of the motor 630, the electronic device 101 including the flexible display 620 may identify the position of the flexible display 620 or the second housing (e.g., the second housing 202) detected by the detection sensor 660.

**In** an embodiment, the electronic device 101 including the flexible display 620 may complete the operation of the motor 630 corresponding to the trigger signal when the position of the flexible display 620 or the second housing 202 detected by the detection sensor 660 is a position corresponding to the trigger signal.

**In** an embodiment, the electronic device 101 including the flexible display 620 may transmit a second driving signal for abnormal-stopping the driving of the motor 630 to the drive circuit 640 when the position of the flexible display 620 or the second housing 202 detected by the detection sensor 660 is different from the position corresponding to the trigger signal.

**In** an embodiment, the electronic device 101 including the flexible display 620 may cumulatively count the number of times of transmission of the second driving signal for abnormal-stopping the driving of the motor 630 or the number of times of abnormal-stopping. **In** an embodiment, the electronic device 101 including the flexible display 620 may select and execute at least one or more of at least one or more of designated recovery controls based on the accumulated number of times of abnormal-stopping of the motor 630.

**In** an embodiment, after cumulatively counting the number of times of abnormal-stopping of the motor 630, or selecting and executing at least one or more of the at least one or more designated at least one recovery controls, if obtaining a trigger signal again, the electronic device 101 including the flexible display 620 may transmit a first driving signal for driving the motor 630 to the drive circuit 640 and the drive circuit 640 may drive the motor 630 in response to the trigger signal.

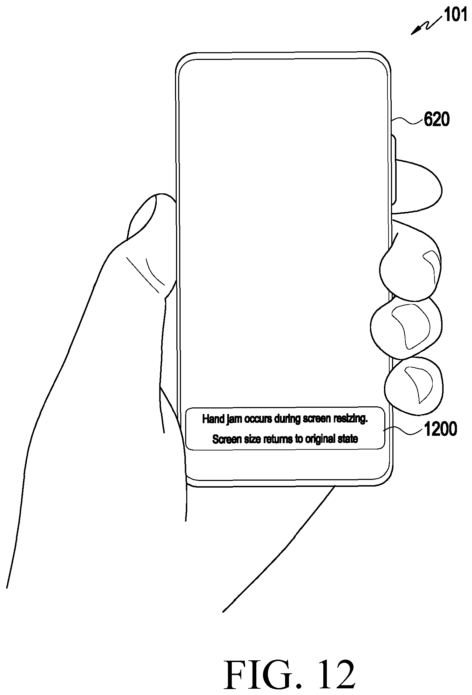

FIG. 12 illustrates a first notification 1200 displayed on a flexible display 620 according to first recovery control according to an embodiment of the disclosure.

Referring to FIG. 12, the electronic device 101 including the flexible display 620 according to an embodiment may drive a motor (e.g., the motor 630 of FIG. 6) in the reverse direction of the driving direction corresponding to the trigger signal when the accumulated number of times of abnormal-stopping is a designated first number (e.g., once).

In an embodiment, the electronic device 101 including the flexible display 620 may drive the motor 630 in the reverse direction of the driving direction corresponding to the trigger signal to an initial position where the trigger signal is received at the maximum speed. In an embodiment, the electronic device 101 including the flexible display 620 may move the second housing 202 to the initial position where the trigger signal is received by driving the motor 630 in the reverse direction based on the position of the flexible display 620 or the second housing (e.g., the second housing 202 of FIG. 2) detected through the detection sensor 660.

In an embodiment, the electronic device 101 including the flexible display 620 may display a first notification 1200 related to driving the motor 630 in the reverse direction on the flexible display 620 when the accumulated number of times of abnormal-stopping is the designated first number.

For example, the first notification 1200 may include a visual image or text associated with driving the motor 630 in the reverse direction. For example, the first notification 1200 may be in the form of a temporary toast popup displayed for a designated time.

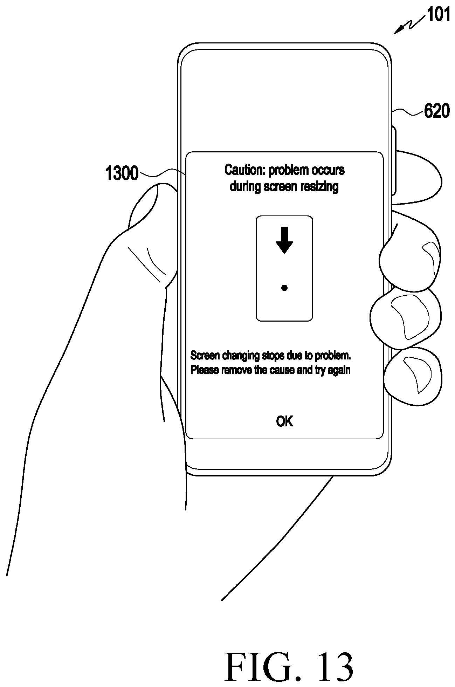

FIG. 13 illustrates a second notification 1300 displayed on a flexible display 620 according to second recovery control according to an embodiment of the disclosure.

Referring to FIG. 13, the electronic device 101 including the flexible display 620 according to an embodiment may display a second notification 1300 for guiding a check in relation to the abnormal operation of the motor (e.g., the motor 630 of FIG. 6) on the flexible display 620 when the accumulated number of times of abnormal-stopping is a second number (e.g., twice) larger than the designated first number.

In an embodiment, the electronic device 101 including the flexible display 620 may drive the motor 630 in the reverse direction of the driving direction corresponding to the trigger signal to the initial position where the trigger signal is received when the accumulated number of times of abnormal-stopping is the designated second number. In an embodiment, the electronic device 101 including the flexible display 620 may move the second housing 202 to the initial position where the trigger signal is received by driving the motor 630 in the reverse direction based on the position of the flexible display 620 or the second housing (e.g., the second housing 202 of FIG. 2) detected through the detection sensor 660.

In an embodiment, the electronic device 101 including the flexible display 620 may display a second notification 1300 guiding a check in relation to the abnormal operation of the motor 630 on the flexible display 620 in a state in which the second housing is moved to the initial position where the trigger signal is received by driving the motor 630 in the reverse direction. In an embodiment, the second notification 1300 may be in the form of a dialog popup in which display is terminated by the user's input (e.g., a touch input).

In an embodiment, the electronic device 101 including the flexible display 620 may display a position where an abnormal operation of the motor 630 occurs or a position where a foreign matter is stuck on the flexible display 620. In an embodiment, the position where the abnormal operation of the motor 630 occurs or the position where the foreign material is stuck may be the position of the flexible display 620 or the position of the second housing 202 detected by the detection sensor 660 at the position where the abnormal operation is detected.

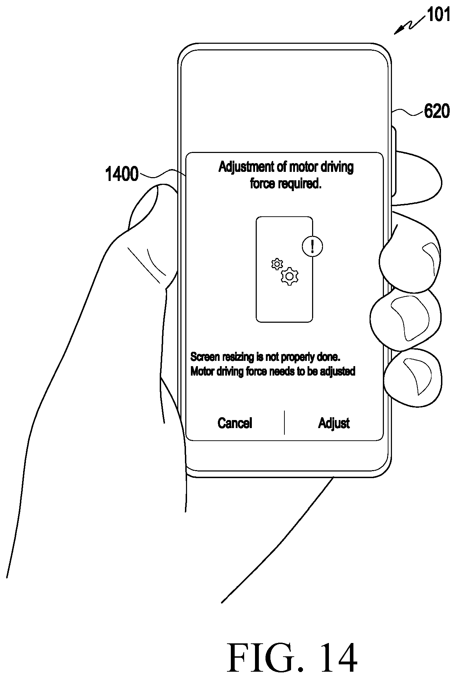

FIG. 14 illustrates a third notification 1400 displayed on a flexible display 620 according to third recovery control according to an embodiment of the disclosure.

Referring to FIG. 14, the electronic device 101 including the flexible display 620 according to an embodiment may display a third notification 1400 for leading to adjust the driving force of the motor (e.g., the motor 630 of FIG. 6) when the accumulated number of times of abnormal-stopping is a designated third number (e.g., three times) larger than the designated first number.

In an embodiment, the electronic device 101 including the flexible display 620 may perform a control operation related to adjustment of the driving force of the motor 630 by the user's input related to the third notification 1400 displayed on the flexible display 620.

In an embodiment, the third notification 1400 may be in the form of a dialog popup in which the display is terminated by the user's input (e.g., a touch input). In an embodiment, the third notification 1400 may include a button related to execution of adjustment of the driving force of the motor 630 and a button related to cancellation.

In an embodiment, the electronic device 101 including the flexible display 620 may drive the motor 630 while changing the current or voltage applied from the drive circuit 640 to the motor 630 based on the position of the flexible display 620 or the second housing 202 detected by the detection sensor 660.

In an embodiment, the electronic device 101 including the flexible display 620 may generate a trigger signal for moving the flexible display 620 or the second housing 202 and drive the motor 630 to move the flexible display 620 or the second housing 202 in response to the trigger signal. In an embodiment, the electronic device 101 including the flexible display 620 may identify whether the flexible display 620 or the second housing 202 moves to the position corresponding to the trigger signal through the detection sensor 660 while gradually changing the current or voltage applied from the drive circuit 640 to the motor 630.

In an embodiment, the electronic device 101 including the flexible display 620 may gradually increase or gradually decrease the current or voltage applied from the drive circuit 640 to the motor 630.

For example, the driving force (e.g., thrust) of the motor 630 according to the voltage and current applied from the drive circuit 640 to the motor 630 may be shown in Table 1 below.

**[Table 1]**

| No | Input voltage | Input current | Current consumption | Thrust |
|---|---|---|---|---|
| 1 | 9.0 [V] | 1.35 [A] | 12.15 [W] | 3.00 [kgf] |
| 2 | 9.0 [V] | 1.30 [A] | 11.70 [W] | 2.80 [kgf] |
| 3 | 8.5 [V] | 1.28 [A] | 10.88 [W] | 2.65 [kgf] |
| 4 | 8.0 [V] | 1.21 [A] | 9.68 [W] | 2.50 [kgf] |
| 5 | 7.5 [V] | 1.17 [A] | 8.78 [W] | 2.30 [kgf] |
| 6 | 7.0 [V] | 1.10 [A] | 7.70 [W] | 2.10 [kgf] |
| 7 | 6.5 [V] | 1.00 [A] | 6.50 [W] | 1.90 [kgf] |
| 8 | 6.5 [V] | 0.88 [A] | 4.84 [W] | 1.40 [kgf] |
| 9 | 5.5 [V] | 0.80 [A] | 4.00 [W] | 1.00 [kgf] |
| 10 | 5.0 [V] | 0.70 [A] | 3.15 [W] | 0.80 [kgf] |
| 11 | 4.5 [V] | 0.58 [A] | 2.32 [W] | 0.70 [kgf] |
| 12 | 4.0 [V] | 0.47 [A] | 1.65 [W] | 0.45 [kgf] |

In an embodiment, the electronic device 101 including the flexible display 620 may change the driving force (e.g., thrust) of the motor 630 by changing the current or voltage applied from the drive circuit 640 to the motor 630. In an embodiment, the electronic device 101 including the flexible display 620 may identify whether the flexible display 620 or the second housing 202 moves to the position corresponding to the trigger signal through the detection sensor 660 while driving the motor 630 based on the trigger signal, and identify an appropriate driving force accordingly. In an embodiment, the electronic device 101 including the flexible display 620 may identify the minimum driving force of the motor 630 in which the flexible display 620 or the second housing 202 moves to the position corresponding to the trigger signal as an appropriate driving force by driving while changing the driving force of the motor 630. Accordingly, the electronic device 101 including the flexible display 620 may identify a change in driving force required to move the second housing 202 due to wear, damage, or introduction of foreign substances in the motor 630, and accordingly, drive the motor 630 with the minimum driving force required to move the second housing 202, thereby minimizing current consumption.

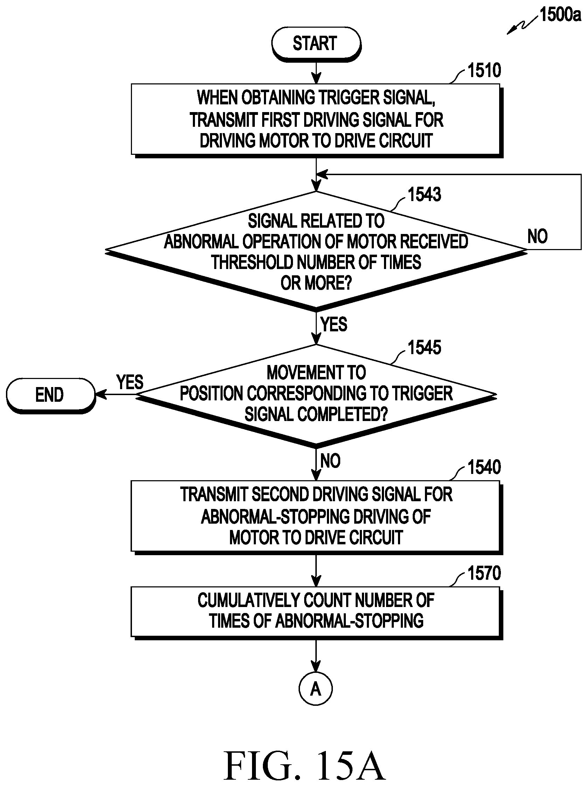

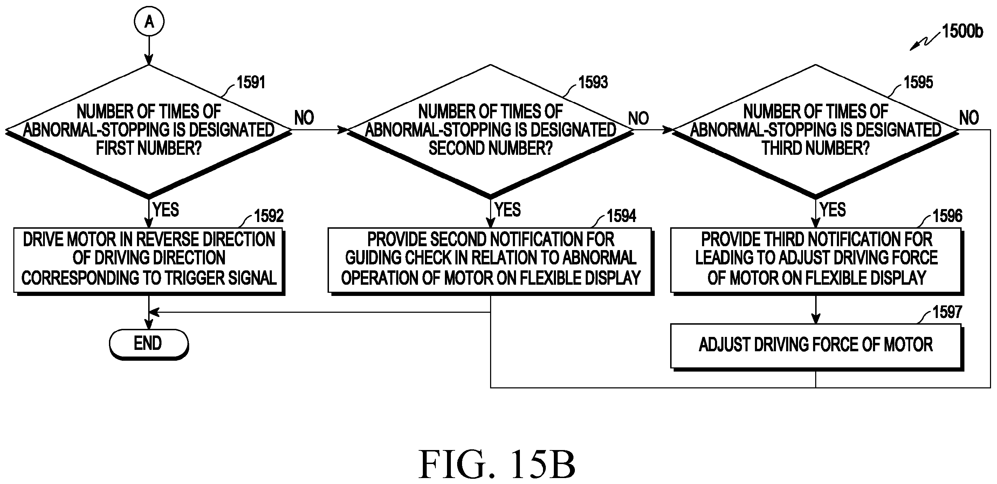

FIGS. 15A and 15B are flowcharts 1500a and 1500b illustrating an operation method of an electronic device 101 including a flexible display 620 according to an embodiment of the disclosure.

Referring to FIGS. 15A and 15B, the electronic device 101 (e.g., the processor 610 of FIG. 6) including the flexible display 620 according to an embodiment may transmit a first driving signal for driving the motor 630 to the drive circuit 640 when a trigger signal is obtained in operation 1510. In an embodiment, the first driving signal may include a driving direction and/or a moving distance of the motor 630 included in the trigger signal.

In operation 1540, the electronic device 101 including the flexible display 620 according to an embodiment may transmit a second driving signal for abnormal-stopping the driving of the motor 630 to the drive circuit 640 based on receiving a signal related to the abnormal operation of the motor 630 in a state in which the motor 630 drives.

The electronic device 101 including the flexible display 620 according to an embodiment may receive a signal related to the abnormal operation of the motor 630 from the monitoring circuit 650 for determining the operation state of the motor 630 based on an input current applied to the motor 630 from the drive circuit 640 to the motor 630 and an output current flowing through the motor 630 in a state in which the input current is applied, as part of transmitting (operation 1540) the second driving signal to the drive circuit 640.

In operation 1543, the electronic device 101 including the flexible display 620 according to an embodiment may identify whether a signal related to the abnormal operation of the motor 630 is received by more than or equal to a threshold number of times set based on the accumulated number of times of abnormal-stopping. In an embodiment, the electronic device 101 including the flexible display 620 may transmit a second driving signal for abnormal-stopping the driving of the motor 630 to the drive circuit 640 in operation 1540 when the signal related to the abnormal operation of the motor 630 is obtained by equal to or more than the threshold number of times set based on the accumulated number of times of abnormal-stopping.

The electronic device 101 including the flexible display 620 according to an embodiment may identify whether the flexible display 620 or the second housing 202 has moved to a position corresponding to the trigger signal through the detection sensor 660 in operation 1545, as part of transmitting (operation 1540) the second driving signal to the drive circuit 640. In an embodiment, the electronic device 101 including the flexible display 620 may complete driving of the motor 630 according to the trigger signal when the flexible display 620 or the second housing 202 moves to the position corresponding to the trigger signal. In an embodiment, the electronic device 101 including the flexible display 620 may transmit the second driving signal for abnormal-stopping the driving of the motor 630 to the drive circuit 640 in operation 1540 when the flexible display 620 or the second housing 202 does not move to the position corresponding to the trigger signal.

In operation 1570, the electronic device 101 including the flexible display 620 according to an embodiment may cumulatively count the number of times of abnormal-stopping the driving of the motor 630 or the number of times of transmitting the second driving signal.

The electronic device 101 including the flexible display 620 according to an embodiment may select and execute at least one or more of at least one or more of designated recovery controls based on the accumulated number of times of abnormal-stopping in operation 1590.

In operation 1591, the electronic device 101 including the flexible display 620 according to an embodiment may determine whether the accumulated number of times of abnormal-stopping is a designated first number. In an embodiment, when the accumulated number of times of abnormal-stopping is the designated first number, the electronic device 101 including the flexible display 620 may drive the motor 630 in a reverse direction of the driving direction corresponding to the trigger signal in operation 1592.

The electronic device 101 including the flexible display 620 according to an embodiment may display a first notification 1200 related to driving the motor 630 in the reverse direction on the flexible display 620 as part of driving the motor 630 in the reverse direction in operation 1592.

In operation 1593, the electronic device 101 including the flexible display 620 according to an embodiment may determine whether the accumulated number of times of abnormal-stopping is a designated second number. In an embodiment, when the accumulated number of times of abnormal-stopping is a designated second number, the electronic device 101 including the flexible display 620 may provide the flexible display 620 with a second notification 1300 for guiding a check in relation to the abnormal operation of the motor 630 in operation 1594.

The electronic device 101 including the flexible display 620 according to an embodiment may drive the motor 630 in the reverse direction as part of providing the second notification 1300 in operation 1594.

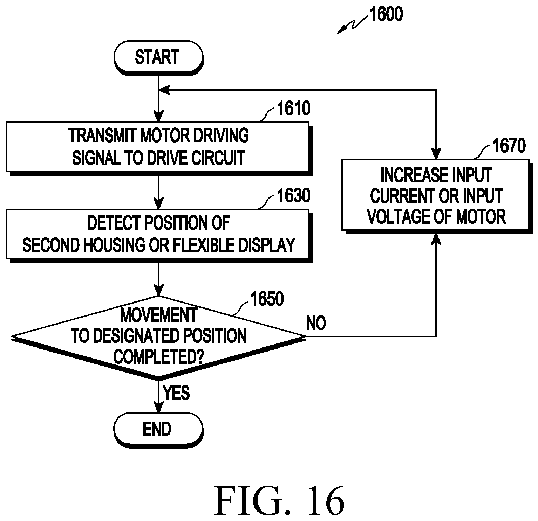

In operation 1595, the electronic device 101 including the flexible display 620 according to an embodiment may determine whether the accumulated number of times of abnormal-stopping is a designated third number. In an embodiment, when the accumulated number of times of abnormal-stopping is the designated third number, the electronic device 101 including the flexible display 620 may provide the flexible display 620 with a third notification 1400 for leading to adjust the driving force of the motor 630 in operation 1596. In an embodiment, when receiving the user's input related to the third notification 1400, the electronic device 101 including the flexible display 620 may adjust the driving force of the motor 630 in operation 1597. An operation of adjusting the driving force of the motor 630 according to an embodiment is described in detail with reference to FIG. 16.

FIG. 16 is a flowchart 1600 illustrating an operation method related to adjustment of a driving force of an electronic device 101 including a flexible display 620 according to an embodiment of the disclosure.

Referring to FIG. 16, the electronic device 101 (e.g., the processor 610 of FIG. 6) including the flexible display 620 according to an embodiment may transmit a driving signal of the motor 630 to the drive circuit 640 in operation 1610. In an embodiment, the driving signal of the motor 630 may be a signal for driving the motor 630 to move the flexible display 620 or the second housing 202 in a first direction or a second direction. In an embodiment, the driving signal of the motor 630 may include a driving direction, a moving distance, and/or a driving force of the motor 630.

In an embodiment, the driving force of the motor 630 may be set to a designated driving force, e.g., the designated driving force may be set to the minimum settable driving force, or may be set to the driving force of the motor 630 when an abnormal stop of the motor 630 has previously occurred.

In operation 1630, the electronic device 101 including the flexible display 620 according to an embodiment may detect the position of the second housing 202 or the flexible display 620 from the detection sensor 660 through the detection sensor 660.

In operation 1650, the electronic device 101 including the flexible display 620 according to an embodiment may determine whether the position of the second housing 202 or the flexible display 620 detected through the detection sensor 660 is completely moved to a designated position in response to the driving signal of the motor 630.

The electronic device 101 including the flexible display 620 according to an embodiment may complete the operation related to adjusting the driving force of the motor 630 when the position of the second housing 202 or the flexible display 620 is moved to the designated position in response to the driving signal of the motor 630.

The electronic device 101 including the flexible display 620 according to an embodiment may increase the input current or input voltage of the motor 630 applied from the drive circuit 640 to the motor 630 when the position movement of the second housing 202 or the flexible display 620 to the designated position in response to the driving signal of the motor 630 is not completed. In an embodiment, the electronic device 101 including the flexible display 620 may gradually increase the input current or input voltage of the motor 630 so that the driving force of the motor 630 gradually increases from the designated driving force.

An electronic device 101 according to an embodiment of the disclosure may comprise a first housing 201, a second housing 202 disposed to be movable with respect to the first housing 201 in a first direction or a second direction, and overlapping at least a portion of the first housing 201, a flexible display 160; 203; 620 at least partially mounted on a surface of the second housing 202, and configured to be at least partially rolled into the first housing 201 or rolled out of the first housing 201, a motor 241; 630 configured to drive the second housing 202 to move with respect to the first housing 201 in the first direction or the second direction, a drive circuit 640 configured to control the driving of the motor 241; 630, a monitoring circuit 650 configured to determine an operation state of the motor 241; 630, and a processor 120; 610 operatively connected to the drive circuit 640 and the monitoring circuit 650. The at least one processor 120; 610 may be configured to, when receiving a trigger signal configured to move the second housing in the first direction or the second direction, transmit a first driving signal configured to drive the motor 241; 630 to the drive circuit 640. The at least one processor120; 610 may be configured to transmit a second driving signal configured to abnormal-stop the driving of the motor 241; 630 to the drive circuit 640 based on receiving a signal related to an abnormal operation of the motor 241; 630 from the monitoring circuit 650 in a state in which the motor 241; 630 drives. The at least one processor120; 610 may be configured to, when an accumulated number of times of the abnormal-stopping is a designated first number or less, drive the motor 241; 630 in a reverse direction of a driving direction corresponding to the trigger signal.

In the electronic device 101 according to an embodiment, the monitoring circuit 650 may be configured to determine an operation state of the motor 241; 630 based on an input current applied to the motor 241; 630 and an output current flowing through the motor 241; 630 in a state in which the input current is applied, from the drive circuit 640.

In the electronic device 101 according to an embodiment, the monitoring circuit 650 may be configured to determine the operation state of the motor 241; 630 based on a phase difference over time between the input current and the output current.

In the electronic device 101 according to an embodiment, the at least one processor 120; 610 may be configured to, as at least part of transmitting the second driving signal to the drive circuit 640, transmit the second driving signal to the drive circuit 640 based on receiving a signal related to an abnormal operation of the motor 241; 630 by a preset threshold number of times based on the accumulated number of times of the abnormal-stopping.

The electronic device according to an embodiment may further comprise a detection sensor 660 configured to detect a position of the flexible display 160; 203; 620 or the second housing 202. The at least one processor 120; 610 may be configured to, as at least part of transmitting the second driving signal to the drive circuit 640, transmit the second driving signal to the drive circuit 640 based on the position of the flexible display 160; 203; 620 or the second housing 202 detected by the detection sensor 660 when receiving a signal related to an abnormal operation of the motor 241; 630.

In the electronic device 101 according to an embodiment, the at least one processor 120; 610 may be configured to, as at least part of driving the motor 241; 630 in the reverse direction, display a first notification 1200 related to driving the motor 241; 630 in the reverse direction on the flexible display 160; 203; 620.

In the electronic device 101 according to an embodiment, the at least one processor 120; 610 may be configured to, as at least part of driving the motor 241; 630 in the reverse direction, display a first notification 1200 related to driving the motor 241; 630 in the reverse direction on the flexible display 160; 203; 620.

In the electronic device 101 according to an embodiment, the at least one processor 120; 610 may be configured to display a second notification 1300 for guiding a check in relation to an abnormal operation of the motor 241; 630 on the flexible display 160; 203; 620 when the accumulated number of times of the abnormal-stopping is a equal to or larger than a second number designated as larger than the designated first number.

**In** the electronic device 101 according to an embodiment, the at least one processor 120; 610 may be configured to display a third notification 1400 for leading to adjust a driving force of the motor 241; 630 on the flexible display 160; 203; 620 when the accumulated number of times of the abnormal-stopping is a equal to or larger than a third number designated as larger than the designated first number.

**In** the electronic device 101 according to an embodiment, the at least one processor 120; 610 may be configured to adjust the driving force of the motor 241; 630 while changing an input current or input voltage applied to the motor 241; 630 from the drive circuit 640 based on a user input related to the third notification.

The electronic device according to an embodiment may further comprise a detection sensor 660 configured to detect a position of the flexible display 160; 203; 620 or the second housing 202. The at least one processor 120; 610 may be configured to, as at least part of adjusting the driving force of the motor 241; 630, drive the motor 241; 630 while changing a current or voltage applied to the motor 241; 630 from the drive circuit 640 based on a position of the flexible display 160; 203; 620 or the second housing 202 detected by the detection sensor 660.

An electronic device 101 according to an embodiment of the disclosure may comprise a first housing 201, a second housing 202 disposed to be movable with respect to the first housing 201 in a first direction or a second direction, and overlapping at least a portion of the first housing 201, a flexible display 160; 203; 620 at least partially mounted on a surface of the second housing 202, and configured to be at least partially rolled into the first housing 201 or rolled out of the first housing 201, a motor 241; 630 configured to drive the second housing 202 to move with respect to the first housing 201 in the first direction or the second direction, a drive circuit 640 configured to control the driving of the motor 241; 630, and a monitoring circuit 650 configured to determine an operation state of the motor 241; 630. A method for operating an electronic device 101 according to an embodiment may comprise, when receiving a trigger signal configured to move the second housing 202 in the first direction or the second direction, transmitting (1510) a first driving signal configured to drive the motor 241; 630 to the drive circuit 640. The method for operating the electronic device 101 according to an embodiment may comprise transmitting (1540) a second driving signal configured to abnormal-stop the driving of the motor 241; 630 to the drive circuit 640 based on receiving a signal related to an abnormal operation of the motor 241; 630 from the monitoring circuit 650 in a state in which the motor 241; 630 drives. The method for operating the electronic device 101 according to an embodiment may comprise, when an accumulated number of times of the abnormal-stopping is a designated first number or less, driving (1592) the motor 241; 630 in a reverse direction of a driving direction corresponding to the trigger signal.

**In** the method for operating the electronic device 101 according to an embodiment, transmitting 1540 the second driving signal to the drive circuit 640 may transmit the second driving signal to the drive circuit 640 when receiving a signal related to an abnormal operation of the motor 241; 630 from the monitoring circuit 650 configured to determine an operation state of the motor 241; 630 based on an input current applied to the motor 241; 630 and an output current flowing through the motor 241; 630 in a state in which the input current is applied, from the drive circuit.

**In** the method for operating the electronic device 101 according to an embodiment, transmitting 1540 the second driving signal to the drive circuit 640 may transmit the second driving signal to the drive circuit 640 based on receiving a signal related to an abnormal operation of the motor 241; 630 by a preset threshold number of times based on the accumulated number of times of the abnormal-stopping.

**In** the method for operating the electronic device 101 according to an embodiment, driving the motor 241; 630 in the reverse direction may display a first notification 1200 related to driving the motor 241; 630 in the reverse direction on the flexible display 160; 203; 620.

The method for operating the electronic device 101 according to an embodiment may further comprise providing (1594) a second notification 1300 for guiding a check in relation to an abnormal operation of the motor 241; 630 on the flexible display 160; 203; 620 when the accumulated number of times of the abnormal-stopping is a equal to or larger than a second number designated as larger than the designated first number.

The method for operating the electronic device 101 according to an embodiment may further comprise displaying (1596) a third notification 1596 for leading to adjust a driving force of the motor 241; 630 on the flexible display 160; 203; 620 when the accumulated number of times of the abnormal-stopping is a equal to or larger than a third number designated as larger than the designated first number.

The method for operating the electronic device 101 according to an embodiment may comprise adjusting (1597) the driving force of the motor 241; 630 while changing an input current or input voltage applied to the motor 241; 630 from the drive circuit 640 based on a user input related to the third notification.

**In** the method for operating the electronic device (101) according to an embodiment, adjusting (1597) the driving force of the motor 241; 630 may drive the motor 241; 630 while changing a current or voltage applied to the motor 241; 630 from the drive circuit 640 based on a position of the flexible display 160; 203; 620 or the second housing 202 detected by the detection sensor 660.

A non-transitory computer-readable storage medium 130 storing one or more programs according to an embodiment of the disclosure may include, when receiving a trigger signal configured to move a second housing 202 in a first direction or a second direction, transmitting (1510) a first driving signal configured to drive a motor 241; 630 to move the second housing 202 with respect to a first housing 201 in the first direction or the second direction to a drive circuit 640, based on execution of an application. The storage medium 130 according to an embodiment may comprise transmitting (1540) a second driving signal configured to abnormal-stop the driving of the motor 241; 630 to the drive circuit 640 based on receiving a signal related to an abnormal operation of the motor 241; 630 from a monitoring circuit 650 in a state in which the motor 241; 630 drives. The storage medium 130 according to an embodiment may comprise, when an accumulated number of times of the abnormal-stopping is a designated first number or less, driving (1592) the motor 241; 630 in a reverse direction of a driving direction corresponding to the trigger signal.

The electronic device according to an embodiment may be one of various types of electronic devices. The electronic devices may include, for example, a portable communication device (e.g., a smart phone), a computer device, a portable multimedia device, a portable medical device, a camera, an electronic device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
memory (130) storing instructions;
a first housing (201);
a second housing (202) disposed to be movable with respect to the first housing (201) in a first direction or a second direction, and overlapping at least a portion of the first housing (201);
a flexible display (160; 203; 620) at least partially mounted on a surface of the second housing (202), and configured to be at least partially rolled into the first housing (201) or rolled out of the first housing (201);
a motor (241; 630) configured to drive the second housing (202) to move with respect to the first housing (201) in the first direction or the second direction;
a drive circuit (640) configured to control the driving of the motor (241; 630);
a monitoring circuit (650) configured to determine an operation state of the motor (241; 630); and
a processor (120; 610), wherein the instructions, when executed by the processor (120; 610), cause the electronic device (101) to:
when receiving a trigger signal configured to move the second housing in the first direction or the second direction, transmit a first driving signal configured to drive the motor (241; 630) to the drive circuit (640);
based on receiving a signal related to an abnormal operation of the motor (241; 630) from the monitoring circuit (650) in a state in which the motor (241; 630) drives, transmit a second driving signal configured to abnormal-stop the driving of the motor (241; 630) to the drive circuit (640); and
when an accumulated number of times of the abnormal-stopping is a designated first number or less, drive the motor (241; 630) in a reverse direction of a driving direction corresponding to the trigger signal.

2. The electronic device (101) of claim 1, wherein the monitoring circuit (650) is configured to, based on an input current applied to the motor (241; 630) from the drive circuit (640) and an output current flowing through the motor (241; 630) in a state in which the input current is applied, determine an operation state of the motor (241; 630).

3. The electronic device (101) of claim 2, wherein the monitoring circuit (650) is configured to, based on a phase difference according to time between the input current and the output current, determine the operation state of the motor (241; 630).

4. The electronic device (101) of any one of claims 1 to 3, wherein the instructions, when executed by the processor (120; 610), cause the electronic device (101) to, as at least part of transmitting the second driving signal to the drive circuit (640), based on receiving a signal related to the abnormal operation of the motor (241; 630) more than a threshold number of times set based on the accumulated number of times of the abnormal-stopping, transmit the second driving signal to the drive circuit (640).

5. The electronic device (101) of any one of claims 1 to 4, further comprising a detection sensor (660) configured to detect a position of the flexible display (160; 203; 620) or the second housing (202),
wherein the instructions, when executed by the processor (120; 610), cause the electronic device (101) to, as at least part of transmitting the second driving signal to the drive circuit (640), based on the position of the flexible display (160; 203; 620) or the second housing (202) detected by the detection sensor (660), transmit the second driving signal to the drive circuit (640) when receiving a signal related to the abnormal operation of the motor (241; 630).

6. The electronic device (101) of any one of claims 1 to 5, wherein the instructions, when executed by the processor (120; 610), cause the electronic device (101) to, as at least part of driving the motor (241; 630) in the reverse direction, display, on the flexible display (160; 203; 620), a first notification (1200) related to driving the motor (241; 630) in the reverse direction.

7. The electronic device (101) of any one of claims 1 to 6, wherein the instructions, when executed by the processor (120; 610), cause the electronic device (101) to, when the accumulated number of times of the abnormal-stopping is a equal to or larger than a second number designated as larger than the designated first number, display, on the flexible display (160; 203; 620), a second notification (1300) for guiding a check in relation to the abnormal operation of the motor (241; 630)

8. The electronic device (101) of any one of claims 1 to 7, wherein the instructions, when executed by the processor (120; 610), cause the electronic device (101) to, when the accumulated number of times of the abnormal-stopping is a equal to or larger than a third number designated as larger than the designated first number, display, on the flexible display (160; 203; 620), a third notification (1400) for leading to adjust a driving force of the motor (241; 630)

9. The electronic device (101) of claim 8, wherein the instructions, when executed by the processor (120; 610), cause the electronic device (101) to, based on a user input related to the third notification (1400), adjust the driving force of the motor (241; 630) while changing the input current or input voltage applied to the motor (241; 630) from the drive circuit (640)

10. The electronic device (101) of claim 9, further comprising the detection sensor (660) configured to detect a position of the flexible display (160; 203; 620) or the second housing (202),
wherein the instructions, when executed by the processor (120; 610), cause the electronic device (101) to, as at least part of adjusting the driving force of the motor (241; 630), based on a position of the flexible display (160; 203; 620) or the second housing (202) detected by the detection sensor (660), drive the motor (241; 630) while changing a current or voltage applied to the motor (241; 630) from the drive circuit (640)

11. A method for operating an electronic device (101) including a first housing (201), a second housing (202) disposed to be movable with respect to the first housing (201) in a first direction or a second direction, and overlapping at least a portion of the first housing (201), a flexible display (160; 203; 620) at least partially mounted on a surface of the second housing (202), and configured to be rolled into the first housing (201) or rolled out of the first housing (201), a motor (241; 630) configured to drive the second housing (202) to move with respect to the first housing (201) in the first direction or the second direction, a drive circuit (640) configured to control the driving of the motor (241; 630), and a monitoring circuit (650) configured to determine an operation state of the motor (241; 630), the method comprising:
when receiving a trigger signal configured to move the second housing (202) in the first direction or the second direction, transmitting (1510) a first driving signal configured to drive the motor (241; 630) to the drive circuit (640);
based on receiving a signal related to an abnormal operation of the motor (241; 630) from the monitoring circuit (650) in a state in which the motor (241; 630) drives, transmitting (1540) a second driving signal configured to abnormal-stop the driving of the motor (241; 630) to the drive circuit (640); and
when an accumulated number of times of the abnormal-stopping is a designated first number or less, driving (1592) the motor (241; 630) in a reverse direction of a driving direction corresponding to the trigger signal.

12. The method of claim 11, wherein transmitting (1540) the second driving signal to the drive circuit (640) includes, based on an input current applied to the motor (241; 630) and an output current flowing through the motor (241; 630) in a state in which the input current is applied, from the drive circuit (640), transmitting the second driving signal to the drive circuit (640) when receiving a signal related to an abnormal operation of the motor (241; 630) from the monitoring circuit (650) configured to determine an operation state of the motor (241; 630).

13. The method of claim 11 or 12, wherein transmitting (1540) the second driving signal to the drive circuit (640) includes, based on receiving a signal related to the abnormal operation of the motor (241; 630) more than a threshold number of times set based on the accumulated number of times of the abnormal-stopping, transmitting the second driving signal to the drive circuit (640).

14. The method of any one of claims 11 to 13, wherein transmitting (1540) the second driving signal to the drive circuit (640) includes, based on the position of the flexible display (160; 203; 620) or the second housing (202) when receiving a signal related to an abnormal operation of the motor (241; 630), transmitting the second driving signal to the drive circuit (640)

15. A storage medium storing computer-readable instructions, the instructions, when executed by a processor (120; 610) of an electronic device (101), causing an electronic device (101) including a first housing (201), a second housing (202) disposed to be movable with respect to the first housing (201) in a first direction or a second direction, and overlapping at least a portion of the first housing (201), a flexible display (160; 203; 620) at least partially mounted on a surface of the second housing (202), and configured to be rolled into the first housing (201) or rolled out of the first housing (201), a motor (241; 630) configured to drive the second housing (202) to move with respect to the first housing (201) in the first direction or the second direction, a drive circuit (640) configured to control the driving of the motor (241; 630), and a monitoring circuit (650) configured to determine an operation state of the motor (241; 630), to perform operations, wherein the operations include:
when receiving a trigger signal configured to move the second housing in the first direction or the second direction, transmitting (1510), to the drive circuit (640), a first driving signal configured to drive the motor (241; 630) to move the second housing (202) with respect to the first housing (201) in a first direction or a second direction;
based on receiving a signal related to an abnormal operation of the motor (241; 630) from the monitoring circuit (650) configured to determine the operation state of the motor (241; 630) in a state in which the motor (241; 630) drives, transmitting (1540) a second driving signal configured to abnormal-stop the driving of the motor (241; 630) to the drive circuit (640); and
when an accumulated number of times of the abnormal-stopping is a designated first number or less, driving (1592) the motor (241; 630) in a reverse direction of a driving direction corresponding to the trigger signal.
